# EUROPÄISCHE PATENTANMELDUNG

(11) **EP 1 168 623 A1**
(43) Veröffentlichungstag der Anmeldung: **02.01.2002**
(21) Anmeldenummer: 01000252.5
(22) Anmeldetag: 26.06.2001
(51) Int. Cl.: H03K 19/00, G06F 15/16, G06F 13/00

(54) **Digitale mikroelektronische Schaltung mit einer getakteten Datenverarbeitungseinheit und einer Umwandlungseinheit**

(30) Priorität: 27.06.2000 DE 10031222
(71) Anmelder: Philips Corporate Intellectual Property GmbH, 52064 Aachen (DE); Koninklijke Philips Electronics N.V., 5621 BA Eindhoven (NL)
(72) Erfinder: Sommer, Sabine, c/o Philips Corp. Int. Prop. GmbH, 52064 Aachen (DE); Müller, Detlef, c/o Philips Corp. Int. Prop. GmbH, 52064 Aachen (DE); Feuser, Markus, Dr., Philips Corp. Int. Prop. GmbH, 52064 Aachen (DE)
(74) Vertreter: Volmer, Georg, Dipl.-Ing.

(57) **Zusammenfassung**

Eine digitale mikroelektronische Schaltung enthält eine getaktete Datenverarbeitungseinheit (1) und eine Umwandlungseinheit (2), welche am Ausgang der Datenverarbeitungseinheit anliegende Daten einliest, eine vorgegebene Umwandlungsoperation an den Daten ausführt und die umgewandelten Daten weiterleitet. Die Umwandlungseinheit ist derart in einer asynchronen Logikschaltung realisiert, dass die Zeitdauer für die Durchführung der Umwandlungsoperation kleiner ist als der kürzeste Zeitabstand zur nächsten Änderung der am Ausgang der Datenverarbeitungseinheit anliegenden Daten. Auf diese Weise können schnelle serielle synchrone Vorgänge in relativ dazu langsamen synchronen Systemen durch den Einsatz von asynchroner Logik aus der Sichtweise des langsamen synchronen Systems parallelisiert werden, ohne dass ein weiteres hochfrequentes T aktsystem erforderlich wäre.

## Beschreibung

Die Erfindung betrifft eine digitale mikroelektronische Schaltung mit einer getakteten Datenverarbeitungseinheit und einer Umwandlungseinheit, welche die am Ausgang der Datenverarbeitungseinheit anliegenden parallelen Daten einliest, eine vorgegebene Umwandlungsoperation an den Daten ausführt und die umgewandelten Daten weiterleitet.

In digitalen mikroelektronischen Schaltungen erfolgen die Manipulationen von Daten in der Regel synchron, das heißt in einem von einer Uhr vorgegebenen Takt (system clock). Hintereinander geschaltete Verarbeitungseinheiten zur seriellen Verarbeitung von Daten werden dabei in der Regel von derselben Uhr getaktet, damit die seriellen Verarbeitungs-Schritte geordnet und synchron ablaufen können.

Der Nachteil einer derartigen Hintereinanderschaltung synchroner Verarbeitungseinheiten ist, dass die langsamste Verarbeitungseinheit die maximal zulässige Taktrate vorgibt. Weiterhin kann es sein, dass eine Verarbeitungseinheit zur Durchführung ihrer Datenmanipulation mehrere Taktzyklen benötigt. In diesem Falle müssen die anderen Verarbeitungseinheiten eine gleiche Anzahl von Taktzyklen warten, bis sie die Verarbeitung neuer Daten aufnehmen können. Die serielle Datenverarbeitung mit synchronen Verarbeitungseinheiten ist somit in zweierlei Hinsicht in ihrer Geschwindigkeit durch die langsamsten Elemente festgelegt, nämlich sowohl in der anwendbaren Taktrate als auch der Datenverarbeitungsrate (Anzahl der Takte, die für eine vollständige Datenmanipulation benötigt werden).

Ein Beispiel für eine serielle synchrone Datenverarbeitung ist die Verschlüsselung beziehungsweise Prüfung von Daten, welche von einer primären Datenverarbeitungseinheit wie einem Mikroprozessor (CPU) ausgegeben werden. Diese Daten werden typischerweise mit einem Verfahren von seriellen Prozeduren, z.B. einem CRC-Verfahren (Cyclic Redundancy Check) gegen Übertragungsfehler gesichert beziehungsweise auf Übertragungsfehler hin überprüft.
Zur Erhöhung der Verarbeitungsgeschwindigkeit in seriellen Datenverarbeitungssystemen ist es bekannt, n verschiedene Verarbeitungseinheiten mit n unterschiedlichen Taktraten zu versorgen. So kann beispielsweise eine Umwandlungseinheit vorteilhaft mit der mehrfachen Taktrate wie die übrigen Verarbeitungseinheiten betrieben werden, wenn sie für die Ausführung eines einzelnen Taktes weniger Zeit benötigt als die anderen Einheiten und wenn sie andererseits für die Vervollständigung der Datenmanipulation mehr Takte als die anderen Verarbeitungseinheiten benötigt. Auf diese Weise kann eine gewisse Beschleunigung der Gesamtverarbeitung in einem System schneller serieller synchroner Vorgänge und relativ langsamer synchroner Vorgänge erzielt werden. Die Bereitstellung zweier oder mehrerer unterschiedlicher Taktsysteme führt jedoch zu Problemen bei der Generierung der Takte. Insbesondere kann es zu Störungen durch Taktüberlagerungen kommen. Weiterhin ergeben sich durch einen begrenzten maximal möglichen Takt Geschwindigkeitsgrenzen der Gesamtverarbeitung so dass nicht die Vorgangsgeschwindigkeit die maximal mögliche Verarbeitungsgeschwindigkeit vorgibt.

Vor diesem Hintergrund war es Aufgabe der vorliegenden Erfindung, eine digitale mikroelektronische Schaltung der eingangs genannten Art so zu verbessern, dass sich in einfacher Weise eine Steigerung der Gesamtverarbeitungsrate von Daten ergibt.

Diese Aufgabe wird durch eine Schaltung mit den Merkmalen des Anspruchs 1 gelöst.

Die digitale mikroelektronische Schaltung enthält demnach mindestens eine von einer Systemuhr getaktete Datenverarbeitungseinheit wie zum Beispiel einen Mikroprozessor sowie eine Umwandlungseinheit, welche die am Ausgang der Datenverarbeitungseinheit anliegenden Daten einliest, mit diesen Daten eine vorgegebene Umwandlungsoperation ausführt und die so umgewandelten Daten weiterleitet. Die Schaltung ist dadurch gekennzeichnet, dass die Umwandlungseinheit derart als asynchrone Logikschaltung realisiert ist, dass die Zeitdauer für die Durchführung der Umwandlungsoperation in dieser Logikschaltung kleiner ist als der kürzeste Zeitabstand zur nächsten Änderung der am Ausgang der Datenverarbeitungseinheit anliegenden Daten.

Bei der erfindungsgemäßen Schaltung wird demnach eine serielle Verarbeitung von Daten mit synchronen, getakteten Einheiten und asynchronen, nicht getakteten Einheiten vorgenommen. Obwohl die Verarbeitungseinheiten nicht durch Zugrundelegung eines gemeinsamen Taktes synchronisiert sind, kann dennoch eine geordnete serielle Verarbeitung der Daten erreicht werden, indem die asynchrone Logik in ihrer Verarbeitungsgeschwindigkeit in bestimmter Weise in Hinblick auf die anderen Einheiten realisiert wird. Die Bedingung an die Verarbeitungsgeschwindigkeit der asynchronen Logik besteht darin, dass die Zeitdauer für die Durchführung einer Umwandlungsoperation mit am Eingang anliegenden Daten kleiner ist als der kürzeste mögliche Zeitabstand zur nächsten Änderung der am Ausgang der Datenverarbeitungseinheit anliegenden Daten. Diese Bedingung wird insbesondere dann eingehalten, wenn die maximale Dauer der Umwandlungsoperation bezüglich aller in Frage kommenden Daten kürzer ist als der minimale Zeitabstand zwischen der Änderung von Daten am Ausgang der Datenverarbeitungseinheit. Durch die genannten Bedingungen wird sichergestellt, dass die Umwandlungsoperation der asynchronen Logik beendet ist, wenn am Ausgang der Datenverarbeitungseinheit neue Daten für die Umwandlung vorliegen.

Bei einer für die Praxis besonders relevanten Ausgestaltung der erfindungsgemäßen Schaltung handelt es sich bei der in der Umwandlungseinheit ausgeführten Umwandlungsoperation um eine Verschlüsselungs- und/oder Prüfoperation. Vorzugsweise kann es sich um ein CRC-Verfahren handeln. Die Ausführung eines derartigen Verfahrens erfordert in einer synchronen Logik eine verhältnismäßig große Anzahl von T aktzyklen, so dass die Ausführung dieses Verfahrens in einem synchronen System gemäß dem Stand der Technik die gesamte Verarbeitungsgeschwindigkeit der Daten herabsetzt. Andererseits lässt sich z.B. ein CRC-Verfahren mit geringer logischer Gattertiefe realisieren, so dass es in einer asynchron arbeitenden Umwandlungseinheit mit hoher Geschwindigkeit durchgeführt werden kann.

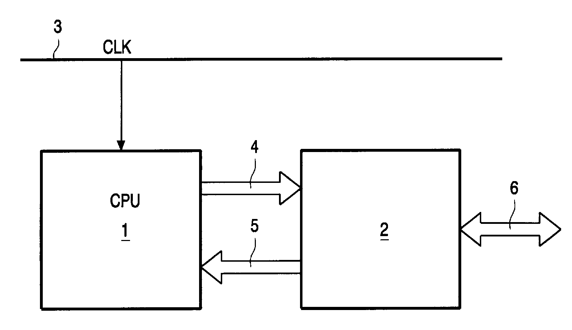

Im Folgenden wird die Erfindung mit Hilfe der einzigen Figur beispielhaft erläutert. Die Figur zeigt schematisch eine digitale mikroelektronische Schaltung mit zwei Verarbeitungseinheiten, nämlich einem digitalen Mikroprozessor (CPU) 1 und einer Umwandlungseinheit 2. Am Ausgang der Datenverarbeitungseinheit 1 parallel anfallende Daten sollen mittels eines seriellen Verschlüsselungsverfahrens von der Umwandlungseinheit 2 geprüft werden. Zum Beispiel kann in der Umwandlungseinheit 2 ein CRC32 Verfahren CPU op-code aufzeichnen.

Die Datenverarbeitungseinheit 1 ist an eine Taktsignalleitung 3 für die Übertragung des Systemtaktes CLK angeschlossen. Bei herkömmlichen Systemen würde auch die Umwandlungseinheit 2 an die Taktsignalleitung 3 angeschlossen sein, um synchron mit der Datenverarbeitungseinheit 1 arbeiten zu können. Dabei würden jedoch zur synchronen seriellen Abarbeitung der Verschlüsselung mehrere clock-Perioden benötigt, bevor das nächste parallele Datenwort verarbeitet werden konnte. Dies würde unter Umständen zu erheblichen Wartezeiten in der parallelen Datenverarbeitung führen.

Erfindungsgemäß wird daher die Umwandlungseinheit 2 mittels asynchroner Logik realisiert, so dass sie unabhängig vom Systemtakt auf der Leitung 3 arbeitet. Die durchzuführende Umwandlungsoperation findet dabei dennoch mit hoher Geschwindigkeit statt, da Vorgänge mit geringer logischer Gattertiefe erheblich schneller ablaufen können als von der Systemfrequenz vorgegeben. Die serielle Verschlüsselung mittels asynchroner Logik kann so schnell durchgeführt werden, dass sie abgeschlossen ist, bevor neue Daten von der Datenverarbeitungseinheit 1 bereitgestellt werden. Der Gesamtablauf der seriellen Datenverarbeitung wird daher nicht dadurch gestört, dass die Umwandlungseinheit 2 asynchron arbeitet.

Mit dem in der Figur gezeigten System ist es zum Beispiel möglich, eine CRC32 Verschlüsselung in zwei system-clock -Perioden eines mit 16 MHz getakteten Prozessors asynchron ablaufen zu lassen. Wenn die aufzuzeichnenden Daten alle zwei clock-Perioden anfallen, ergibt sich aus Sicht der Datenverarbeitungseinheit 2 eine quasi parallele Verschlüsselung.
Durch die erfindungsgemäße Ausgestaltung der Schaltung können somit schnelle serielle synchrone Vorgänge in relativ dazu langsamen synchronen Systemen durch den Einsatz von asynchroner Logik aus der Sichtweise des langsamen synchronen Systems parallelisiert werden, ohne dass ein weiteres hochfrequentes T aktsystem erforderlich wäre.
Die Umwandlungseinheit 2 gibt die Ergebnisse der Umwandlung an ihrem Ein-/Ausgang 6 an eine nachfolgende Einheit weiter. Sie kann alternativ auch die asynchron berechneten Ergebnisse über die Leitung 5 an die CPU 1 zur Weiterverarbeitung leiten. Ebenso ist es möglich, dass die Umwandlungseinheit 2 ihre Eingangsdaten über die Leitung 6 erhält.

Andere Beispiele für die Funktion der Umwandlungseinheit 2 sind neben dem CRC oder CRC32 Verfahren z.B. die Datenkompression, die Fehlerkorrektur, Verschlüsselungsverfahren, Hash-Funktionen und dergleichen.

Bezugszeichen:
- 1: Datenverarbeitungseinheit CPU
- 2: Umwandlungseinheit
- 3: Taktsignalleitung
- 4,5,6: Datenleitung

## Patentansprüche

1. Digitale mikroelektronische Schaltung mit einer getakteten
Datenverarbeitungseinheit (1) und einer Umwandlungseinheit (2), welche am Ausgang der Datenverarbeitungseinheit anliegende Daten einliest, eine vorgegebene Umwandlungsoperation an den Daten ausführt und die umgewandelten Daten weiterleitet,
**dadurch gekennzeichnet,**
**dass** die Umwandlungseinheit derart in einer asynchronen Logikschaltung realisiert ist, dass die Zeitdauer für die Durchführung der Umwandlungsoperation kleiner ist als der kürzeste Zeitabstand zur nächsten Änderung der am Ausgang der
Datenverarbeitungseinheit anliegenden Daten.

2. Digitale mikroelektronische Schaltung nach Anspruch 1,
**dadurch gekennzeichnet,**
**dass** die Umwandlungsoperation eine Verschlüsselung, eine Kompression, eine Fehlerkorrektur, eine Hash-Funktion und/oder Prüfoperation ist, vorzugsweise ein CRC-Verfahren.
